# EUROPEAN PATENT SPECIFICATION

(11) **EP 3 373 137 B1**
(45) Date of publication and mention of the grant of the patent: **06.01.2021**
(21) Application number: 17192926.8
(22) Date of filing: 25.09.2017
(51) Int. Cl.: G06F 9/50, H04W 88/02

(54) **METHOD, APPARATUS AND TERMINAL DEVICE FOR SENDING BROADCAST**
VERFAHREN, VORRICHTUNG UND ENDGERÄTEVORRICHTUNG FÜR RUNDFUNKSENDUNGEN
PROCÉDÉ, APPAREIL ET DISPOSITIF TERMINAL D'ENVOI DE DIFFUSION

(30) Priority: 10.03.2017 CN 201710140901
(43) Date of publication of application: 12.09.2018
(73) Proprietor: GUANGDONG OPPO MOBILE TELECOMMUNICATIONS CORP., LTD., Wusha, Chang'an Dongguan, Guangdong 523860 (CN)
(72) Inventor: PEI, Runsheng, Gongguan, Guangdong 523860 (CN); FU, Liangjing, Dongguan, Guangdong 523860 (CN); WU, Ruyu, Dongguan, Guangdong 523860 (CN); LIN, Zhiyong, Dongguan, Guangdong 523860 (CN); ZHANG, Jun, Dongguan, Guangdong 523860 (CN)
(74) Representative: Manitz Finsterwald Patent- und Rechtsanwaltspartnerschaft mbB

(56) References cited:
- EP-A1- 0 760 131
- US-A1- 2004 215 773
- US-A1- 2016 323 170
- IGOR KALKOV ET AL: "Predictable Broadcasting of Parallel Intents in Real-Time Android", JAVA TECHNOLOGIES FOR REAL-TIME AND EMBEDDED SYSTEMS, ACM, 2 PENN PLAZA, SUITE 701 NEW YORK NY 10121-0701 USA, 13 October 2014 (2014-10-13), pages 57-66, XP058059159, DOI: 10.1145/2661020.2661023 ISBN: 978-1-4503-2813-5

## Description

### TECHNICAL FIELD

The embodiments of the disclosure relate to a computer technology, and in particular, to a method, apparatus and terminal device for sending broadcast.

### BACKGROUND

A broadcast is a mechanism widely applied between applications for information transmission. For example, an android system implements data transmission and sharing between applications by means of a broadcast such as a short message broadcast and a call broadcast pre-embedded in the android system.

In the android system, a broadcast sender sends a broadcast message by calling a sendBroadcast function. A broadcast recipient registers a broadcast receiver with a management module by calling a registerReceiver function and defines a broadcast message of interest, thus implementing receiving of the corresponding broadcast message.

In the related art, a broadcast sending process is defective, leading to low efficiency of broadcast processing, high consumption of system resources and poor system stability.

The features of the preamble of the independent claims are known from EP 0 760 131 A1 and also US 2016/323170 A1.

### SUMMARY

Embodiments of the disclosure provide a method, apparatus and terminal device for sending broadcast, capable of improving the broadcast processing efficiency, reducing the consumption of system resources, and increasing the system stability.

The invention is defined in the independent claims 1 and 7.

The technical solution provided in the embodiment of the disclosure solves the problems in the existing broadcast sending, improves the broadcast processing efficiency, reduces the consumption of system resources, and increases the system stability.

### BRIEF DESCRIPTION OF DRAWINGS

Other features, purposes and advantages of the disclosure will become more apparent by reading detailed description made on nonrestrictive embodiments with reference to the accompanying drawings.
FIG. 1 is a flowchart illustrating a method for sending broadcast according to an embodiment of the disclosure.
FIG. 2 is a flowchart illustrating another method for sending broadcast according to an embodiment of the disclosure.
FIG. 3 is a flowchart illustrating yet another method for sending broadcast according to an embodiment of the disclosure.
FIG. 4 is a structure block diagram illustrating an apparatus for sending broadcast according to an embodiment of the disclosure.
FIG. 5 is a structure diagram illustrating a terminal device according to an embodiment of the disclosure.

### DETAILED DESCRIPTION

The disclosure will be further illustrated in detail below with reference to the drawings and the embodiments. It will be appreciated that specific embodiments described herein are only used to explain the disclosure and not to limit the disclosure. In addition, it is also to be noted that, for convenience of description, only parts relevant to the disclosure, instead of all contents, are illustrated in the drawings.

Some embodiments of the disclosure provide a method for sending broadcast, the method being applied to a terminal device and including: acquiring a current broadcast message to be sent in a broadcast sending queue, and determining a sending process of the current broadcast message to be sent; determining a sending process of an already sent broadcast message in the broadcast sending queue; and determining, according to whether the sending process of the current broadcast message to be sent is the same sending process as the sending process of the already sent broadcast message, whether to send the current broadcast message to be sent to a broadcast recipient of the current broadcast message to be sent while the already sent broadcast message is being processed.

In some embodiments, the determining, according to whether the sending process of the current broadcast message to be sent is the same sending process as the sending process of the already sent broadcast message, whether to send the current broadcast message to be sent to a broadcast recipient of the current broadcast message to be sent while the already sent broadcast message is being processed may include: when the sending process of the current broadcast message to be sent is different from the sending process of the already sent broadcast message, sending the current broadcast message to be sent to the broadcast recipient of the current broadcast message to be sent while the already sent broadcast message is being processed.

In some embodiments, after sending the current broadcast message to be sent to the broadcast recipient of the current broadcast message to be sent, the method may further include: removing the already sent broadcast message from the broadcast sending queue, and storing the already sent broadcast message in an array; and after receiving a feedback result sent by a current broadcast recipient of the already sent broadcast message, sending the already sent broadcast message stored in the array to a next broadcast recipient of the already sent broadcast message.

In some embodiments, the determining, according to whether the sending process of the current broadcast message to be sent is the same sending process as the sending process of the already sent broadcast message, whether to send the current broadcast message to be sent to a broadcast recipient of the current broadcast message to be sent while the already sent broadcast message is being processed may include: when the sending process of the current broadcast message to be sent is the same sending process as the sending process of the already sent broadcast message, performing control not to send the current broadcast message to be sent to the broadcast recipient of the current broadcast message to be sent while the already sent broadcast message is being processed.

In some embodiments, the method may further include: when the sending process of the current broadcast message to be sent is the same sending process as the sending process of the already sent broadcast message, acquiring a next broadcast message to be sent, which is after the current broadcast message to be sent, from the broadcast sending queue, and determining a sending process of the next broadcast message to be sent; and when the sending process of the next broadcast message to be sent is different from the sending process of the already sent broadcast message, sending the next broadcast message to be sent to a broadcast recipient of the next broadcast message to be sent while the already sent broadcast message is being processed,.

In some embodiments, the sending process of the already sent broadcast message may include a sending process, recorded during sending of the broadcast message, for sending the broadcast message, and the sending process of the already sent broadcast message may be updated according to a processing state of the already sent broadcast message.

In some embodiments, it may be determined whether the sending process of the current broadcast message to be sent is the same sending process as the sending process of the already sent broadcast message according to an identification of the sending process of the current broadcast message to be sent and an identification of the sending process of the already sent broadcast message.

Some embodiments of the disclosure provide an apparatus for sending broadcast, the apparatus being applied to a terminal device and including one or more processors, wherein the one or more processors are configured to execute computer-readable instructions to implement a plurality of modules, the plurality of modules including: an acquisition module, configured to acquire a current broadcast message to be sent in a broadcast sending queue; a first sending process determining module, configured to determine a sending process of the current broadcast message to be sent; a second sending process determining module, configured to determine a sending process of an already sent broadcast message in the broadcast sending queue; and a control module, configured to determine, according to whether the sending process of the current broadcast message to be sent is the same sending process as the sending process of the already sent broadcast message, whether to send the current broadcast message to be sent to a broadcast recipient of the current broadcast message to be sent while the already sent broadcast message is being processed.

In some embodiments, the control module may be specifically configured to: send, when the sending process of the current broadcast message to be sent is different from the sending process of the already sent broadcast message, the current broadcast message to be sent to the broadcast recipient of the current broadcast message to be sent while the already sent broadcast message is being processed.

In some embodiments, the apparatus may further include: a storage module, configured to remove, after sending the current broadcast message to be sent to the broadcast recipient of the current broadcast message to be sent, the already sent broadcast message from the broadcast sending queue, and store the already sent broadcast message in an array, wherein the control module is further configured to send, after receiving a feedback result sent by a current broadcast recipient of the already sent broadcast message, the already sent broadcast message stored in the array to a next broadcast recipient of the already sent broadcast message.

In some embodiments, the control module may be specifically configured to: perform control not to send, when the sending process of the current broadcast message to be sent is the same sending process as the sending process of the already sent broadcast message, the current broadcast message to be sent to the broadcast recipient of the current broadcast message to be sent while the already sent broadcast message is being processed.

In some embodiments, the control module may be further configured to: acquire, when the sending process of the current broadcast message to be sent is the same sending process as the sending process of the already sent broadcast message, a next broadcast message to be sent, which is after the current broadcast message to be sent, from the broadcast sending queue, and determine a sending process of the next broadcast message to be sent; and send, when the sending process of the next broadcast message to be sent is different from the sending process of the already sent broadcast message, the broadcast message to be sent to a broadcast recipient of the broadcast message to be sent while the already sent broadcast message is being processed.

In some embodiments, the one or more processors may be further configured to execute the computer-readable instructions to implement: an update module, configured to update the sending process of the already sent broadcast message according to a processing state of the already sent broadcast message, the sending process of the already sent broadcast message including a sending process, recorded during sending of the broadcast message, for sending the broadcast message.

In some embodiments, the control module may be configured to determine whether the sending process of the current broadcast message to be sent is the same sending process as the sending process of the already sent broadcast message according to an identification of the sending process of the current broadcast message to be sent and an identification of the sending process of the already sent broadcast message.

Some embodiments of the disclosure provide a terminal device, including: a processor, a memory and a computer program that is stored on the memory and is executable on the processor, wherein when the processor is configured to executes the computer program for: acquiring a current broadcast message to be sent in a broadcast sending queue, and determining a sending process of the current broadcast message to be sent; determining a sending process of an already sent broadcast message in the broadcast sending queue; and determining, according to whether the sending process of the current broadcast message to be sent is the same sending process as the sending process of the already sent broadcast message, whether to send the current broadcast message to be sent to a broadcast recipient of the current broadcast message to be sent while the already sent broadcast message is being processed.

In some embodiments, the determining, according to whether the sending process of the current broadcast message to be sent is the same sending process as the sending process of the already sent broadcast message, whether to send the current broadcast message to be sent to a broadcast recipient of the current broadcast message to be sent while the already sent broadcast message is being processed may include: when the sending process of the current broadcast message to be sent is different from the sending process of the already sent broadcast message, sending the current broadcast message to be sent to the broadcast recipient of the current broadcast message to be sent while the already sent broadcast message is being processed.

In some embodiments, the processor is configured to execute the computer program for performing: after sending the current broadcast message to be sent to the broadcast recipient of the current broadcast message to be sent, removing the already sent broadcast message from the broadcast sending queue, and storing the already sent broadcast message in an array; and after receiving a feedback result sent by a current broadcast recipient of the already sent broadcast message, sending the already sent broadcast message stored in the array to a next broadcast recipient of the already sent broadcast message.

In some embodiments, the determining, according to whether the sending process of the current broadcast message to be sent is the same sending process as the sending process of the already sent broadcast message, whether to send the current broadcast message to be sent to a broadcast recipient of the current broadcast message to be sent while the already sent broadcast message is being processed may include: when the sending process of the current broadcast message to be sent is the same sending process as the sending process of the already sent broadcast message, performing control not to send the current broadcast message to be sent to the broadcast recipient of the current broadcast message to be sent while the already sent broadcast message is being processed.

In some embodiments, the processor may be configured to execute the computer program for performing: when the sending process of the current broadcast message to be sent is the same sending process as the sending process of the already sent broadcast message, acquiring a next broadcast message to be sent, which is after the current broadcast message to be sent, from the broadcast sending queue, and determining a sending process of the next broadcast message to be sent; and when the sending process of the next broadcast message to be sent is different from the sending process of the already sent broadcast message, sending the next broadcast message to be sent to a broadcast recipient of the next broadcast message to be sent while the already sent broadcast message is being processed.

In some embodiments, the sending process of the already sent broadcast message may include a sending process, recorded during sending of the broadcast message, for sending the broadcast message, and the sending process of the already sent broadcast message may be updated according to a processing state of the already sent broadcast message.

According to a fourth aspect, some embodiments of the disclosure provide a non-transitory computer-readable storage medium having stored thereon instructions that, when executed by a processor, cause the processor to perform the method for sending broadcast as described above.

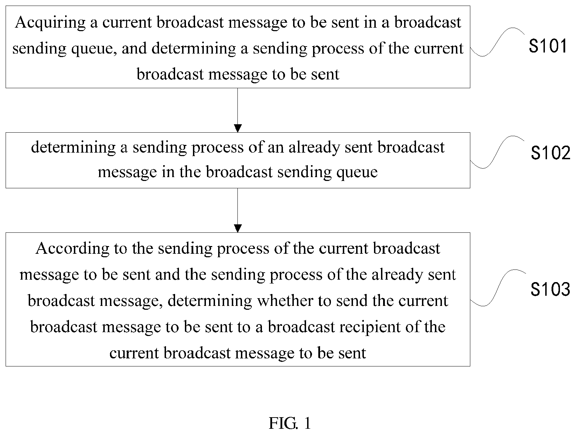

FIG. 1 is a flowchart illustrating a method for sending broadcast according to an embodiment of the disclosure. The present embodiment can be applied to a situation of controlling broadcast sending in a system. The method may be executed by a terminal device provided in the embodiment of the disclosure. An apparatus for sending broadcast of the terminal device may be implemented in a software manner and/or a hardware manner. As illustrated in FIG. 1, a specific solution provided in the present embodiment is as follows.

In a block S101, a current broadcast message to be sent in a broadcast sending queue is acquired, and a sending process of the current broadcast message to be sent is determined.

In a broadcast mechanism, a broadcast message refers to information sent in a running process of a system or an application and transmitted between the system and the application. Exemplarily, the broadcast message may be a system starting broadcast message, a short-message broadcast message, a call broadcast message or a third party application broadcast message.

During broadcast processing, a service process of a broadcast sender sends a broadcast message to a management module (e.g., ActivityManagerService) by calling a broadcast sending function (e.g., a sendBroadcast function). After receiving the broadcast message, the management module puts the broadcast message into a broadcast sending queue. The management module sends the broadcast message in the broadcast sending queue to a broadcast recipient satisfying a receiving condition by means of a process communication mechanism (e.g., a Binder process communication mechanism).

In one embodiment, the management module sends the broadcast messages in the broadcast sending queue in sequence. The broadcast message sending process of the broadcast sender and the broadcast message receiving process of the broadcast recipient are asynchronous operation processes. The broadcast sender and the broadcast recipient are matched in a low-coupling relation by means of the management module. Here, the broadcast messages may be classified into normal broadcast messages and ordered broadcast messages according to different broadcast sending manners. After normal broadcast messages are sent by the management module, broadcast recipients receive the broadcast messages out of order. By contrast, after ordered broadcast messages are sent by the management module, the broadcast recipients sequentially receive the broadcast messages in an order. That is, only when the first broadcast recipient receives a broadcast message and completely processes the broadcast message, the second broadcast recipient can start to receive and process the broadcast message, and this principle may also apply to the next recipients. The present embodiment may be applied to a case of controlling over processing of the ordered broadcast messages. Specifically, in a case where a broadcast recipient receives a broadcast message, the management module may acquire a register instruction for a broadcast receiver. The register instruction for the broadcast receiver may be sent by the broadcast recipient. Usually, the broadcast recipient registers (subscribes for) a broadcast message to be received in the management module by means of the process communication mechanism. A service process of the broadcast recipient registers the broadcast receiver in the management module by calling a registerReceiver function, and defines a broadcast message of interest. When sending a broadcast message in the broadcast sending queue, the management module sends, according to the register situation of a broadcast recipient, the broadcast message to a message cycle queue corresponding to the broadcast recipient who subscribes for the broadcast message. After receiving the broadcast message, the broadcast recipient calls back a receiving method (e.g., an onReceive method) in the registered broadcast receiver to execute corresponding functions so as to process the received broadcast message.

In one embodiment, a current broadcast message to be sent in the broadcast sending queue is acquired, and a process of a broadcast sender corresponding to the broadcast message is determined. The current broadcast message to be sent may be a broadcast message to be immediately processed in the broadcast queue. That is, an already sent broadcast message is being processed, and after the already sent broadcast message is completely processed, the current broadcast message to be sent will be processed. Specifically, when sending the broadcast message, the broadcast sender will start a corresponding process. The process refers to a running activity of a program in the system about a certain data set, is a basic unit of the system for resource allocation and scheduling, is a composition basis of a system structure, and is a basic executive subject of the application. A counter application will be taken as an example for a broadcast sender. The broadcast message sending process of the counter application may be expressed as:
//create a broadcast message
   Intent intent = new Intent (BROADCAST_COUNTER_ACTION);
//transfer counter parameters and corresponding count values
   intent.putExtra (COUNTER_VALUE, counter);
//send the broadcast message
   sendBroadcast (intent)

In the present embodiment, when the acquired broadcast message is BROADCAST_COUNTER_ACTION, a sending process used for sending the broadcast message BROADCAST_COUNTER_ACTION is determined. Exemplarily, the sending process can be determined according to a corresponding process ID.

In a block S102, a sending process of an already sent broadcast message in the broadcast sending queue is determined.

In one embodiment, an already sent broadcast message in the broadcast sending queue is acquired, and a corresponding sending process for sending the broadcast message is determined according to the contents of the already sent broadcast message. The specific process is as mentioned in the block S101 and will not be elaborated here.

In a block S103, according to whether the sending process of the current broadcast message to be sent is the same sending process as the sending process of the already sent broadcast message, it is determined whether to send the current broadcast message to be sent to a broadcast recipient of the current broadcast message to be sent while the already sent broadcast message is being processed.

In the block S103, according to the sending process, that corresponds to the current broadcast message to be sent and is determined in a block S101, and the sending process, that corresponds to the already sent broadcast message and is determined in a block S102, it is determined whether to send the current broadcast message to be sent while the already sent broadcast message is being processed.

In one embodiment, when the sending process of the current broadcast message to be sent is different from the sending process of the already sent broadcast message, the current broadcast message to be sent is sent to the broadcast recipient of the current broadcast message to be sent while the already sent broadcast message is being processed. In the present embodiment, since the sending process of the current broadcast message to be sent is different from the sending process of the already sent broadcast message, the current broadcast message to be sent may be sent instantly without waiting for processing of the previous broadcast message to be finished, thereby implementing parallel sending of an ordered broadcast queue.

It is to be noted that in one embodiment, the solution is to control and process the broadcast sending queue. Here, it is monitored that the management module sends a broadcast message according to an order of broadcast messages in the broadcast sending queue, and a process of the current broadcast message to be sent may be determined.

According to the technical solution provided in the present embodiment, a current broadcast message to be sent in a broadcast sending queue is acquired, and a sending process of the current broadcast message to be sent is determined; a sending process of an already sent broadcast message in the broadcast sending queue is determined; and according to whether the sending process of the current broadcast message to be sent is the same sending process as the sending process of the already sent broadcast message, it is determined whether to send the current broadcast message to be sent to a broadcast recipient of the current broadcast message to be sent while the already sent broadcast message is being processed. Thus, the problem of low broadcast processing efficiency caused by the fact that a next broadcast message can be sent only when an already sent broadcast message is completely processed in an existing ordered broadcast sending queue is solved, thereby greatly shortening the processing time of a broadcast queue.

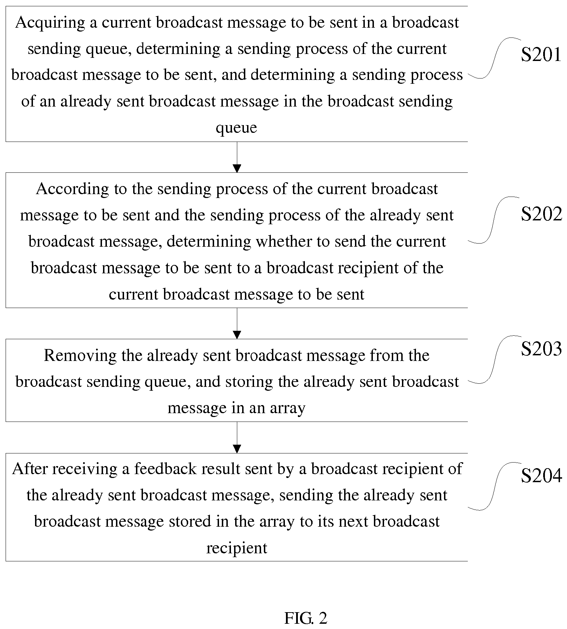

FIG. 2 is a flowchart illustrating another method for sending broadcast according to an embodiment of the disclosure. On the basis of the above-mentioned embodiment, the method for sending broadcast may further include: after sending the current broadcast message to be sent to the broadcast recipient of the current broadcast message to be sent, removing the already sent broadcast message from the broadcast sending queue, and storing the already sent broadcast message in an array; and after receiving a feedback result sent by a current broadcast recipient of the already sent broadcast message, sending the already sent broadcast message stored in the array to a next broadcast recipient of the already sent broadcast message.

On the basis of the above-mentioned optimization, as illustrated in FIG. 2, the technical solution provided in the present embodiment may be as follows specifically.

In a block S201, a current broadcast message to be sent in a broadcast sending queue is acquired, a sending process of the current broadcast message to be sent is determined, and a sending process of an already sent broadcast message in the broadcast sending queue is determined.

In a block S202, according to whether the sending process of the current broadcast message to be sent is the same sending process as the sending process of the already sent broadcast message, it is determined whether to send the current broadcast message to be sent to a broadcast recipient of the current broadcast message to be sent while the already sent broadcast message is being processed.

In a block S203, the already sent broadcast message is removed from the broadcast sending queue, and is stored in an array.

In one embodiment, when a broadcast message is sent and processed, the broadcast message that is being processed is reserved in the broadcast queue, and when a feedback is given after the broadcast message is completely processed, the broadcast message is removed from the broadcast queue. In the present embodiment, when it is determined that the sending process of the current broadcast message to be sent is not the same sending process as the sending process of the already sent broadcast message, the broadcast message to be sent is sent in time and processed. In this case, optionally, the already sent broadcast message in the broadcast queue is removed from the broadcast queue and stored in an array. The array may be a new array, used for storing the already sent broadcast message.

In a block S204, after receiving a feedback result sent by a broadcast recipient of the already sent broadcast message, the already sent broadcast message stored in the array is sent to a next broadcast recipient of the already sent broadcast message.

In one embodiment, the broadcast recipient will feed a processing result back after the corresponding broadcast message is completely processed. When the processing feedback result is received, the broadcast message is sent to the next broadcast recipient for being processed. Here, a register process of receiving a broadcast message by a broadcast recipient may be expressed as (for example, when a broadcast message sent by a counter is to be received):
//define a broadcast message of interest (subscribe for a broadcast message) IntentFiltercounterActionFilter =
   newIntentFilter (CounterService.BROADCAST_COUNTER_ACTION);
//register a broadcast receiver
   registerReceiver (counterActionReceiver,counterActionFilter)

When a broadcast message (BROADCAST_COUNTER_ACTION) sent by the broadcast sender has been sent by a management module, the broadcast message will be received and processed by a corresponding broadcast recipient since the broadcast recipient registers a broadcast receiver for receiving the broadcast message.

In one embodiment, the already sent broadcast message is removed from the broadcast queue and stored in the new array. After the feedback result is received, the new array will be looked up for the broadcast message. The broadcast message is then sent to the next broadcast recipient. Thus, the parallel sending of the broadcast messages in the ordered broadcast queue can be implemented, and each broadcast message is processed in order. This further optimizes a broadcast sending processing manner, improves the broadcast processing efficiency, and ensures the orderliness of broadcast message processing.

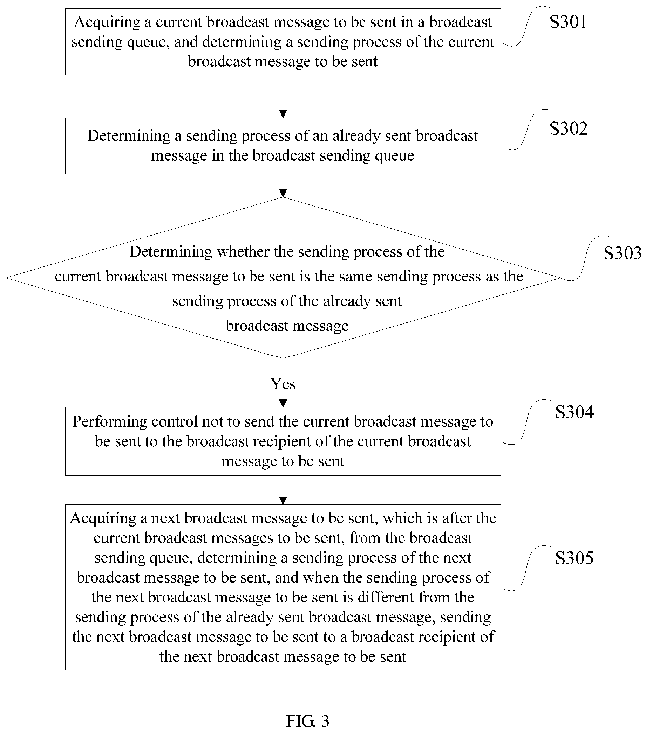

FIG. 3 is a flowchart illustrating another method for sending broadcast according to an embodiment of the disclosure. On the basis of the above-mentioned embodiment, optionally, when the sending process of the current broadcast message to be sent is the same sending process as the sending process of the already sent broadcast message, control will be performed such that the current broadcast message to be sent is not sent to the broadcast recipient of the current broadcast message to be sent while the already sent broadcast message is being processed. A next broadcast message to be sent, which is after the current broadcast message to be sent, is acquired from the broadcast sending queue. The sending process of the next broadcast message to be sent is determined; and when the sending process of the next broadcast message to be sent is different from the sending process of the already sent broadcast message, the next broadcast message to be sent is sent to a broadcast recipient of the next broadcast message to be sent while the already sent broadcast message is being processed.

On the basis of the above-mentioned optimization, as illustrated in FIG. 3, the technical solution provided in the present embodiment is as follows specifically.

In a block S301, a current broadcast message to be sent in a broadcast sending queue is acquired, and a sending process of the current broadcast message to be sent is determined.

In a block S302, a sending process of an already sent broadcast message in the broadcast sending queue is determined.

In a block S303, it is judged whether the sending process of the current broadcast message to be sent is the same sending process as the sending process of the already sent broadcast message. When the sending process of the current broadcast message to be sent is the same sending process as the sending process of the already sent broadcast message, a block S304 and a block S305 are executed.

In the block S304, control is performed such that the current broadcast message to be sent is not sent to the broadcast recipient of the current broadcast message to be sent while the already sent broadcast message is being processed.

In one embodiment, when it is determined that the sending process of the current broadcast message to be sent is the same sending process as the sending process of the already sent broadcast message, control is performed such that the current broadcast message to be sent is not sent but will be sent after the broadcast message in the same process is completely processed, for avoiding occupancy of the same process.

In a block S305, a next broadcast message to be sent, which is after the current broadcast message to be sent, is acquired from the broadcast sending queue, and a sending process of the next broadcast message to be sent is determined. When the sending process of the next broadcast message to be sent is different from the sending process of the already sent broadcast message, the next broadcast message to be sent is sent to a broadcast recipient of the next broadcast message to be sent while the already sent broadcast message is being processed.

In one embodiment, according to an order of broadcast messages in the broadcast queue, it is sequentially determined whether to send the broadcast messages. When a sending process of a broadcast message is different from the sending process of the already sent broadcast message, the broadcast message is sent while the already sent broadcast message is being processed. When the sending process of the broadcast message is the same sending process as the sending process of the already sent broadcast message, a next broadcast message is continuously acquired, and a corresponding sending process is determined to determine whether to send the broadcast message.

The present embodiment provides a method for sending broadcast. When the sending process of the current broadcast message to be sent is the same sending process as the sending process of the already sent broadcast message, control is performed such that the current broadcast message to be sent is not sent to the broadcast recipient of the current broadcast message to be sent while the already sent broadcast message is being processed; a next broadcast message to be sent, which is after the current broadcast message to be sent, is acquired from the broadcast sending queue, and a sending process of the next broadcast message to be sent is determined; and when the sending process of the next broadcast message to be sent is different from the sending process of the already sent broadcast message, the next broadcast message to be sent is sent to a broadcast recipient of the next broadcast message to be sent while the already sent broadcast message is being processed. Thus, parallel sending of an ordered broadcast queue is implemented, the broadcast processing efficiency is improved, and the power consumption of a system is reduced.

On the basis of the above-mentioned technical solution, in one embodiment, the sending process of the already sent broadcast message includes a sending process, recorded during sending of the broadcast message, for sending the broadcast message, and the sending process of the already sent broadcast message is updated according to a processing state of the already sent broadcast message. During determination of a sending process of a broadcast message in a broadcast sending queue, since there may be a great number of broadcast messages in the broadcast sending queue, when it is determined that a sending process of a broadcast message is the same sending process as a sending process of the already sent broadcast message, the already sent broadcast message that is previously recorded has been processed completely to release a corresponding process. In the present solution, the sending process of the already sent broadcast message is updated according to a processing state of the already sent broadcast message. If processing is completed, the process is correspondingly set to be not occupied so as to send a new broadcast message.

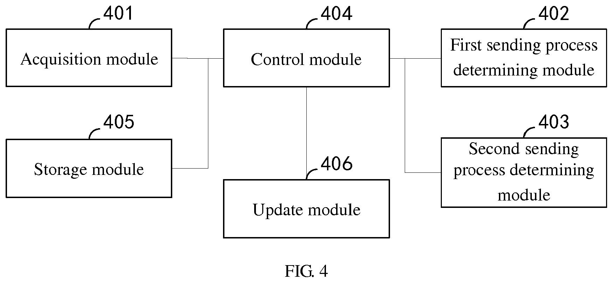

FIG. 4 is a structure block diagram illustrating an apparatus for sending broadcast according to an embodiment of the disclosure. The apparatus is configured to execute the method for sending broadcast provided in the above-mentioned embodiment, and has corresponding functional modules for executing the method as well as beneficial effects of the method. As illustrated in FIG. 4, the apparatus specifically includes: an acquisition module 401, a first sending process determining module 402, a second sending process determining module 403 and a control module 404.

The acquisition module 401 is configured to acquire a current broadcast message to be sent in a broadcast sending queue.

The first sending process determining module 402 is configured to determine a sending process of the current broadcast message to be sent.

The second sending process determining module 403 is configured to determine a sending process of an already sent broadcast message in the broadcast sending queue.

The control module 404 is configured to determine, according to whether the sending process of the current broadcast message to be sent is the same sending process as the sending process of the already sent broadcast message, whether to send the current broadcast message to be sent to a broadcast recipient of the current broadcast message to be sent while the already sent broadcast message is being processed.

The technical solution provided in the present embodiment solves the problems in the existing broadcast sending, improves the broadcast processing efficiency, reduces the consumption of system resources, and increases the system stability.

Optionally, the control module 404 may be specifically configured to: send, when the sending process of the current broadcast message to be sent is different from the sending process of the already sent broadcast message, the current broadcast message to be sent to the broadcast recipient of the current broadcast message to be sent while the already sent broadcast message is being processed.

Optionally, the broadcast sending apparatus may further include: a storage module 405. The storage module 405 is configured to remove, after sending the current broadcast message to be sent to the broadcast recipient of the current broadcast message to be sent, the already sent broadcast message from the broadcast sending queue, and store the already sent broadcast message in an array. In this case, the control module 404 may be further configured to send, after receiving a feedback result sent by a current broadcast recipient of the already sent broadcast message, the already sent broadcast message stored in the array to a next broadcast recipient of the already sent broadcast message.

Optionally, the control module 404 may be specifically configured to: perform control not to send, when the sending process of the current broadcast message to be sent is the same sending process as the sending process of the already sent broadcast message, the current broadcast message to be sent to the broadcast recipient of the current broadcast message to be sent while the already sent broadcast message is being processed; acquire a next broadcast message to be sent, which is after the current broadcast message to be sent, from the broadcast sending queue, and determine a sending process of the broadcast message to be sent; and send, when the sending process of the broadcast message to be sent is different from the sending process of the already sent broadcast message, the broadcast message to be sent to a broadcast recipient of the broadcast message to be sent while the already sent broadcast message is being processed.

Optionally, the broadcast sending apparatus may further include an update module 405. The update module 405 is configured to update the sending process of the already sent broadcast message according to a processing state of the already sent broadcast message. The sending process of the already sent broadcast message includes a sending process, recorded during sending of the broadcast message, for sending the broadcast message.

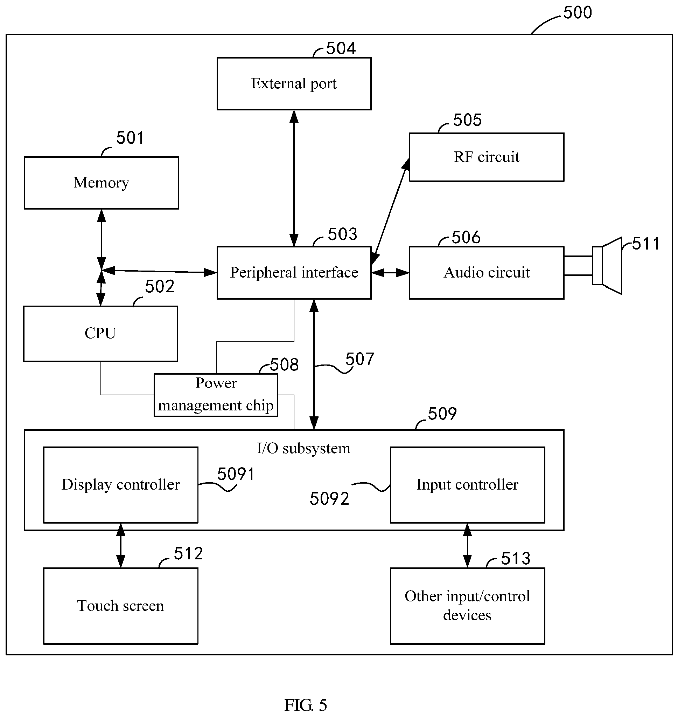

The present embodiment provides a terminal device on the basis of each of the above-mentioned embodiments. The terminal device may include an apparatus for sending broadcast provided in the disclosure. FIG. 5 is a structure diagram illustrating a terminal device according to embodiments of the disclosure. As illustrated in FIG. 5, the terminal device may include: a memory 501, a Central Processing Unit (CPU) 502, a peripheral interface 503, a Radio Frequency (RF) circuit 505, an audio circuit 506, a loudspeaker 511, a power management chip 508, an Input/Output (I/O) subsystem 509, a touch screen 512, other input/control devices 510 and an external port 504, which communicate through one or more communication buses or signal lines 507.

It will be appreciated that the terminal device 500 illustrated in the figure is only an example of a terminal device, and the terminal device 500 may have components more or less than those illustrated in the figure. two or more components of the terminal device 500 may be combined, or the terminal device 500 may have different component configurations. Various components illustrated in the figure may be implemented in hardware, software, or a combination of hardware and software. The hardware may include one or more signal processing and/or dedicated integrated circuits.

A terminal device for sending broadcast provided in the present embodiment will be described in detail below. A smart phone is taken as an example of the terminal device.

The memory 501 may be accessed by the CPU 502, the peripheral interface 503 and the like. The memory 501 may include a high-speed random access memory. Or the memory 501 may include a nonvolatile memory such as one or more disk storage apparatuses, a flash apparatus or other volatile solid storage apparatuses.

The peripheral interface 503 may connect input and output peripherals of the device to the CPU 502 and the memory 501.

The I/O subsystem 509 may connect the input and output peripherals on the device, such as the touch screen 512 and the other input/control devices 510, to the peripheral interface 503. The I/O subsystem 509 may include a display controller 5091 and one or more input controllers 5092 for controlling the other input/control devices 510. Here, the one or more input controllers 5092 receive an electric signal from the other input/control devices 510 or send an electric signal to the other input/control devices 510. The other input/control devices 510 may include a physical button (e.g. press button, rocker button, etc.), a dial, a sliding switch, an operating rod and a clicking roller. It is to be noted that the input controller 5092 may be connected to any one of a keyboard, an infrared port, a Universal Serial Bus (USB) interface and a pointing device such as a mouse.

The touch screen 512 is an input interface and an output interface between a user terminal and a user, and displays a visual output to the user. Here, the visual output may include a graph, a text, an icon, a video and the like.

The display controller 5091 in the I/O subsystem 509 receives an electric signal from the touch screen 512 or sends an electric signal to the touch screen 512. The touch screen 512 detects a contact on the touch screen. The display controller 5091 converts the detected contact into an interaction with a user interface object displayed on the touch screen 512 to realize a human-computer interaction. The user interface object displayed on the touch screen 512 may be an icon of game running, an icon of connection to a corresponding network, or the like. It is to be noted that the device may further include an optical mouse, which is a touch-sensitive surface that does not display the visual output or an extension of a touch-sensitive surface formed by the touch screen.

The RF circuit 505 is mainly used for establishing communications between a mobile phone and a wireless network (i.e., network side) to realize data receiving and sending between the mobile phone and the wireless network such as receiving and sending of a short message, an E-mail and the like. Specifically, the RF circuit 505 receives and sends an RF signal that is also referred to as an electromagnetic signal, and the RF circuit 505 converts an electric signal into an electromagnetic signal or converts an electromagnetic signal into an electric signal, and communicates with a communication network and other devices through the electromagnetic signal. The RF circuit 505 may include a known circuit for executing these functions, which includes, but is not limited to, an antenna system, an RF transceiver, one or more amplifiers, a tuner, one or more oscillators, a digital signal processor, a Coder-Decoder (CODEC) chip group, a Subscriber Identity Module (SIM) and the like.

The audio circuit 506 is mainly used for receiving audio data from the peripheral interface 503, converting the audio data into an electric signal, and sending the electric signal to the loudspeaker 511.

The loudspeaker 511 is used for restoring a voice signal that is received, by the mobile phone, from the wireless network through the RF circuit 505 into a sound, and playing the sound to the user.

The power management chip 508 is used for performing power supply and power management on hardware connected to the CPU 502, the I/O subsystem and the peripheral interface.

The CPU 502 provided in the embodiment of the disclosure may execute the following operations:
acquiring a current broadcast message to be sent in a broadcast sending queue, and determining a sending process of the current broadcast message to be sent;
determining a sending process of an already sent broadcast message in the broadcast sending queue; and
determining, according to whether the sending process of the current broadcast message to be sent is the same sending process as the sending process of the already sent broadcast message, whether to send the current broadcast message to be sent to a broadcast recipient of the current broadcast message to be sent while the already sent broadcast message is being processed.

Optionally, the determining, according to whether the sending process of the current broadcast message to be sent is the same sending process as the sending process of the already sent broadcast message, whether to send the current broadcast message to be sent to a broadcast recipient of the current broadcast message to be sent while the already sent broadcast message is being processed includes: when the sending process of the current broadcast message to be sent is different from the sending process of the already sent broadcast message, sending the current broadcast message to be sent to the broadcast recipient of the current broadcast message to be sent while the already sent broadcast message is being processed.

Optionally, after sending the current broadcast message to be sent to the broadcast recipient of the current broadcast message to be sent, the operation further includes: removing the already sent broadcast message from the broadcast sending queue, and storing the already sent broadcast message in an array; and after receiving a feedback result sent by a current broadcast recipient of the already sent broadcast message, sending the already sent broadcast message stored in the array to a next broadcast recipient of the already sent broadcast message.

Optionally, the determining, according to whether the sending process of the current broadcast message to be sent is the same sending process as the sending process of the already sent broadcast message, whether to send the current broadcast message to be sent to a broadcast recipient of the current broadcast message to be sent while the already sent broadcast message is being processed includes: when the sending process of the current broadcast message to be sent is the same sending process as the sending process of the already sent broadcast message, performing control not to send the current broadcast message to be sent to the broadcast recipient of the current broadcast message to be sent while the already sent broadcast message is being processed; acquiring a next broadcast message to be sent, which is after the current broadcast message to be sent, from the broadcast sending queue, and determining a sending process of the broadcast message to be sent; and when the sending process of the broadcast message to be sent is different from the sending process of the already sent broadcast message, sending the broadcast message to be sent to a broadcast recipient of the broadcast message to be sent while the already sent broadcast message is being processed.

Alternatively, the sending process of the already sent broadcast message includes a sending process, recorded during sending of the broadcast message, for sending the broadcast message, and the sending process of the already sent broadcast message is updated according to a processing state of the already sent broadcast message.

It is to be noted that the above is only the preferable embodiments and technical principle of the disclosure. A person skilled in the art will understand that the disclosure is not limited to the specific embodiments here, but to the scope of the appended claims. As will occur to a person skilled in the art, various obvious changes, re-adjustments and replacements can be made without departing from the scope of protection of the appended claims.

## Claims

1. A method for sending broadcast which is a mechanism applied between applications in a terminal device for information transmission, the method being applied to the terminal device and comprising:
acquiring (S101), from a broadcast sending queue, a current broadcast message to be sent,
and determining a sending process for sending the current broadcast message to be sent;
**characterized by**
determining (S102) a sending process of an already sent broadcast message in the broadcast sending queue, wherein the already sent broadcast message is being processed and reserved in the broadcast sending queue; and
determining (S103), according to whether the sending process of the current broadcast message to be sent is the same sending process as the sending process of the already sent broadcast message, whether to send the current broadcast message to be sent to a broadcast recipient of the current broadcast message to be sent while the already sent broadcast message is being processed,
wherein the determining (SI03), according to whether the sending process of the current broadcast message to be sent is the same sending process as the sending process of the already sent broadcast message, whether to send the current broadcast message to be sent to a broadcast recipient of the current broadcast message to be sent while the already sent broadcast message is being processed comprises:
when the sending process of the current broadcast message to be sent is different from the sending process of the already sent broadcast message, sending the current broadcast message to be sent to the broadcast recipient of the current broadcast message to be sent while the already sent broadcast message is being processed.

2. The method according to claim 1, wherein after sending the current broadcast message to be sent to the broadcast recipient of the current broadcast message to be sent, the method further comprises:
removing (S203) the already sent broadcast message from the broadcast sending queue, and storing the already sent broadcast message in an array; and
after receiving a feedback result sent by a current broadcast recipient of the already sent broadcast message, sending (S204) the already sent broadcast message stored in the array to a next broadcast recipient of the already sent broadcast message.

3. The method according to claim 1, wherein determining (SI03), according to whether the sending process of the current broadcast message to be sent is the same sending process as the sending process of the already sent broadcast message, whether to send the current broadcast message to be sent to a broadcast recipient of the current broadcast message to be sent while the already sent broadcast message is being processed further comprises:
when the sending process of the current broadcast message to be sent is the same sending process as the sending process of the already sent broadcast message, performing (S304) control not to send the current broadcast message to be sent to the broadcast recipient of the current broadcast message to be sent while the already sent broadcast message is being processed.

4. The method according to claim 3, further comprising:
when the sending process of the current broadcast message to be sent is the same sending process as the sending process of the already sent broadcast message, acquiring a next broadcast message to be sent, which is after the current broadcast message to be sent, from the broadcast sending queue, and determining a sending process of the next broadcast message to be sent; and
when the sending process of the next broadcast message to be sent is different from the sending process of the already sent broadcast message, sending the next broadcast message to be sent to a broadcast recipient of the next broadcast message to be sent while the already sent broadcast message is being processed.

5. The method according to any one of claims 1-4, wherein the sending process of the already sent broadcast message comprises a sending process, recorded during sending of the broadcast message, for sending the broadcast message, and the sending process of the already sent broadcast message is updated according to a processing state of the already sent broadcast message.

6. The method according to any one of claims 1-5, wherein it is determined whether the sending process of the current broadcast message to be sent is the same sending process as the sending process of the already sent broadcast message according to an identification of the sending process of the current broadcast message to be sent and an identification of the sending process of the already sent broadcast message.

7. An apparatus for sending broadcast which is a mechanism applied between applications in a terminal device for information transmission, the apparatus being applied to a terminal device and comprising:
an acquisition module (401), configured to acquire, from a broadcast sending queue, a current broadcast message to be sent;
a first sending process determining module (402), configured to determine a sending process for sending the current broadcast message to be sent;
**characterized by**
a second sending process determining module (403), configured to determine a sending process of an already sent broadcast message in the broadcast sending queue, wherein the already sent broadcast message is being processed and reserved in the broadcast sending queue; and
a control module (404), configured to determine, according to whether the sending process of the current broadcast message to be sent is the same sending process as the sending process of the already sent broadcast message, whether to send the current broadcast message to be sent to a broadcast recipient of the current broadcast message to be sent while the already sent broadcast message is being processed,
wherein the control module (404) is specifically configured to:
send, when the sending process of the current broadcast message to be sent is different from the sending process of the already sent broadcast message, the current broadcast message to be sent to the broadcast recipient of the current broadcast message to be sent while the already sent broadcast message is being processed.

8. The apparatus according to claim 7, further comprising:
a storage module (405), configured to remove, after sending the current broadcast message to be sent to the broadcast recipient of the current broadcast message to be sent, the already sent broadcast message from the broadcast sending queue, and store the already sent broadcast message in an array, wherein
the control module (404) is further configured to send, after receiving a feedback result sent by a current broadcast recipient of the already sent broadcast message, the already sent broadcast message stored in the array to a next broadcast recipient of the already sent broadcast message.

9. The apparatus according to claim 7, wherein the control module (404) is specifically configured to:
perform control not to send, when the sending process of the current broadcast message to be sent is the same sending process as the sending process of the already sent broadcast message, the current broadcast message to be sent to the broadcast recipient of the current broadcast message to be sent while the already sent broadcast message is being processed.

10. The apparatus according to claim 9, wherein the control module (404) is further configured to:
acquire, when the sending process of the current broadcast message to be sent is the same sending process as the sending process of the already sent broadcast message, a next broadcast message to be sent, which is after the current broadcast message to be sent, from the broadcast sending queue, and determine a sending process of the next broadcast message to be sent; and
send, when the sending process of the next broadcast message to be sent is different from the sending process of the already sent broadcast message, the broadcast message to be sent to a broadcast recipient of the broadcast message to be sent while the already sent broadcast message is being processed.

11. The apparatus according to any one of claims 7-10, further comprising:
an update module (406), configured to update the sending process of the already sent broadcast message according to a processing state of the already sent broadcast message, the sending process of the already sent broadcast message comprising a sending process, recorded during sending of the broadcast message, for sending the broadcast message.

12. The apparatus according to any one of claims 7-11, wherein the control module (404) is configured to determine whether the sending process of the current broadcast message to be sent is the same sending process as the sending process of the already sent broadcast message according to an identification of the sending process of the current broadcast message to be sent and an identification of the sending process of the already sent broadcast message.

13. A terminal device, comprising the apparatus according to any one of claims 7-12.

## Patentansprüche

1. Verfahren zum Senden eines Broadcasts, der ein Mechanismus ist, der zwischen Anwendungen in einem Endgerät für Informationsübertragung angewandt wird, wobei das Verfahren auf das Endgerät angewandt wird und Folgendes umfasst:
Erfassen (S101), von einer Broadcast-Sendewarteschlange, einer aktuellen zu sendenden Broadcast-Nachricht, und
Bestimmen eines Sendevorgangs zum Senden der aktuellen zu sendenden Broadcast-Nachricht;
**gekennzeichnet durch**
Bestimmen (S102) eines Sendevorgangs einer bereits gesendeten Broadcast-Nachricht in der Broadcast-Sendewarteschlange,
wobei die bereits gesendete Broadcast-Nachricht in der Broadcast-Sendewarteschlange verarbeitet und reserviert wird; und
Bestimmen (S103), gemäß der Frage, ob der Sendevorgang der aktuellen zu sendenden Broadcast-Nachricht der gleiche Sendevorgang wie der Sendevorgang der bereits gesendeten Broadcast-Nachricht ist, ob die aktuelle zu sendende Broadcast-Nachricht zu einem Broadcast-Empfänger der aktuellen zu sendenden Broadcast-Nachricht zu senden ist, während die bereits gesendete Broadcast-Nachricht verarbeitet wird,
wobei das Bestimmen (S103), gemäß der Frage, ob der Sendevorgang der aktuellen zu sendenden Broadcast-Nachricht der gleiche Sendevorgang wie der Sendevorgang der bereits gesendeten Broadcast-Nachricht ist, ob die aktuelle zu sendende Broadcast-Nachricht zu einem Broadcast-Empfänger der aktuellen zu sendenden Broadcast-Nachricht zu senden ist, während die bereits gesendete Broadcast-Nachricht verarbeitet wird,
Folgendes umfasst:
wenn der Sendevorgang der aktuellen zu sendenden Broadcast-Nachricht unterschiedlich von dem Sendevorgang der bereits gesendeten Broadcast-Nachricht ist, Senden der aktuellen zu sendenden Broadcast-Nachricht zu dem Broadcast-Empfänger der aktuellen zu sendenden Broadcast-Nachricht, während die bereits gesendete Broadcast-Nachricht verarbeitet wird.

2. Verfahren gemäß Anspruch 1,
wobei, nach dem Senden der aktuellen zu sendenden Broadcast-Nachricht zu dem Broadcast-Empfänger der aktuellen zu sendenden Broadcast-Nachricht, das Verfahren ferner Folgendes umfasst:
Entfernen (S203) der bereits gesendeten Broadcast-Nachricht von der Broadcast-Sendewarteschlange, und
Speichern der bereits gesendeten Broadcast-Nachricht in einem Array; und
nach dem Empfangen eines von einem aktuellen Broadcast-Empfänger der bereits gesendeten Broadcast-Nachricht gesendeten Feedback-Ergebnisses, Senden (S204) der in dem Array gespeicherten bereits gesendeten Broadcast-Nachricht zu einem nächsten Broadcast-Empfänger der bereits gesendeten Broadcast-Nachricht.

3. Verfahren gemäß Anspruch 1,
wobei das Bestimmen (S103), gemäß der Frage, ob der Sendevorgang der aktuellen zu sendenden Broadcast-Nachricht der gleiche Sendevorgang wie der Sendevorgang der bereits gesendeten Broadcast-Nachricht ist, ob die aktuelle zu sendende Broadcast-Nachricht zu einem Broadcast-Empfänger der aktuellen zu sendenden Broadcast-Nachricht zu senden ist, während die bereits gesendete Broadcast-Nachricht verarbeitet wird, ferner Folgendes umfasst:
wenn der Sendevorgang der aktuellen zu sendenden Broadcast-Nachricht der gleiche Sendevorgang wie der Sendevorgang der bereits gesendeten Broadcast-Nachricht ist, Durchführen (S304) einer Steuerung, die aktuelle zu sendende Broadcast-Nachricht nicht zu dem Broadcast-Empfänger der aktuellen zu sendenden Broadcast-Nachricht zu senden, während die bereits gesendete Broadcast-Nachricht verarbeitet wird.

4. Verfahren gemäß Anspruch 3, das ferner Folgendes umfasst:
wenn der Sendevorgang der aktuellen zu sendenden Broadcast-Nachricht der gleiche Sendevorgang wie der Sendevorgang der bereits gesendeten Broadcast-Nachricht ist, Erfassen einer nächsten zu sendenden Broadcast-Nachricht, die hinter der aktuellen zu sendenden Broadcast-Nachricht liegt, von der Broadcast-Sendewarteschlange, und Bestimmen eines Sendevorgangs der nächsten zu sendenden Broadcast-Nachricht; und
wenn der Sendevorgang der nächsten zu sendenden Broadcast-Nachricht unterschiedlich von dem Sendevorgang der bereits gesendeten Broadcast-Nachricht ist, Senden der nächsten zu sendenden Broadcast-Nachricht zu einem Broadcast-Empfänger der nächsten zu sendenden Broadcast-Nachricht, während die bereits gesendete Broadcast-Nachricht verarbeitet wird.

5. Verfahren gemäß einem der Ansprüche 1-4,
wobei der Sendevorgang der bereits gesendeten Broadcast-Nachricht einen während der Sendung der Broadcast-Nachricht aufgezeichneten Sendevorgang zum Senden der Broadcast-Nachricht umfasst, und der Sendevorgang der bereits gesendeten Broadcast-Nachricht gemäß einem Verarbeitungszustand der bereits gesendeten Broadcast-Nachricht aktualisiert wird.

6. Verfahren gemäß einem der Ansprüche 1-5,
wobei gemäß einer Identifizierung des Sendevorgangs der aktuellen zu sendenden Broadcast-Nachricht und einer Identifizierung des Sendevorgangs der bereits gesendeten Broadcast-Nachricht bestimmt wird, ob der Sendevorgang der aktuellen zu sendenden Broadcast-Nachricht der gleiche Sendevorgang wie der Sendevorgang der bereits gesendeten Broadcast-Nachricht ist.

7. Vorrichtung zum Senden eines Broadcasts, der ein Mechanismus ist, der zwischen Anwendungen in einem Endgerät für Informationsübertragung angewandt wird, wobei die Vorrichtung auf ein Endgerät angewandt wird und Folgendes umfasst:
ein Erfassungsmodul (401), das dazu ausgelegt ist, von einer Broadcast-Sendewarteschlange eine aktuelle zu sendende Broadcast-Nachricht zu erfassen;
ein erstes Sendevorgangs-Bestimmungsmodul (402), das dazu ausgelegt ist, einen Sendevorgang zum Senden der aktuellen zu sendenden Broadcast-Nachricht zu bestimmen;
**gekennzeichnet durch**
ein zweites Sendevorgangs-Bestimmungsmodul (403), das dazu ausgelegt ist, einen Sendevorgang einer bereits gesendeten Broadcast-Nachricht in der Broadcast-Sendewarteschlange zu bestimmen,
wobei die bereits gesendete Broadcast-Nachricht in der Broadcast-Sendewarteschlange verarbeitet und reserviert wird; und
ein Steuermodul (404), das dazu ausgelegt ist, gemäß der Frage, ob der Sendevorgang der aktuellen zu sendenden Broadcast-Nachricht der gleiche Sendevorgang wie der Sendevorgang der bereits gesendeten Broadcast-Nachricht ist, zu bestimmen, ob die aktuelle zu sendende Broadcast-Nachricht zu einem Broadcast-Empfänger der aktuellen zu sendenden Broadcast-Nachricht zu senden ist, während die bereits gesendete Broadcast-Nachricht verarbeitet wird,
wobei das Steuermodul (404) speziell für Folgendes ausgelegt ist:
Senden, wenn der Sendevorgang der aktuellen zu sendenden Broadcast-Nachricht unterschiedlich von dem Sendevorgang der bereits gesendeten Broadcast-Nachricht ist, der aktuellen zu sendenden Broadcast-Nachricht zu dem Broadcast-Empfänger der aktuellen zu sendenden Broadcast-Nachricht, während die bereits gesendete Broadcast-Nachricht verarbeitet wird.

8. Vorrichtung gemäß Anspruch 7, die ferner Folgendes umfasst:
ein Speichermodul (405), das dazu ausgelegt ist, nach dem Senden der aktuellen zu sendenden Broadcast-Nachricht zu dem Broadcast-Empfänger der aktuellen zu sendenden Broadcast-Nachricht, die bereits gesendete Broadcast-Nachricht von der Broadcast-Sendewarteschlange zu entfernen und die bereits gesendete Broadcast-Nachricht in einem Array zu speichern,
wobei das Steuermodul (404) ferner dazu ausgelegt ist, nach dem Empfangen eines von einem aktuellen Broadcast-Empfänger der bereits gesendeten Broadcast-Nachricht gesendeten Feedback-Ergebnisses, die in dem Array gespeicherte bereits gesendete Broadcast-Nachricht zu einem nächsten Broadcast-Empfänger der bereits gesendeten Broadcast-Nachricht zu senden.

9. Vorrichtung gemäß Anspruch 7,
wobei das Steuermodul (404) speziell für Folgendes ausgelegt ist:
Durchführen einer Steuerung, wenn der Sendevorgang der aktuellen zu sendenden Broadcast-Nachricht der gleiche Sendevorgang wie der Sendevorgang der bereits gesendeten Broadcast-Nachricht ist, die aktuelle zu sendende Broadcast-Nachricht nicht zu dem Broadcast-Empfänger der aktuellen zu sendenden Broadcast-Nachricht zu senden, während die bereits gesendete Broadcast-Nachricht verarbeitet wird.

10. Vorrichtung gemäß Anspruch 9,
wobei das Steuermodul (404) ferner für Folgendes ausgelegt ist:
Erfassen, wenn der Sendevorgang der aktuellen zu sendenden Broadcast-Nachricht der gleiche Sendevorgang wie der Sendevorgang der bereits gesendeten Broadcast-Nachricht ist, einer nächsten zu sendenden Broadcast-Nachricht, die hinter der aktuellen zu sendenden Broadcast-Nachricht liegt, von der Broadcast-Sendewarteschlange, und Bestimmen eines Sendevorgangs der nächsten zu sendenden Broadcast-Nachricht; und
Senden, wenn der Sendevorgang der nächsten zu sendenden Broadcast-Nachricht unterschiedlich von dem Sendevorgang der bereits gesendeten Broadcast-Nachricht ist, der zu sendenden Broadcast-Nachricht zu einem Broadcast-Empfänger der zu sendenden Broadcast-Nachricht, während die bereits gesendete Broadcast-Nachricht verarbeitet wird.

11. Vorrichtung gemäß einem der Ansprüche 7-10, die ferner Folgendes umfasst:
ein Aktualisierungsmodul (406), das dazu ausgelegt ist, den Sendevorgang der bereits gesendeten Broadcast-Nachricht gemäß einem Verarbeitungszustand der bereits gesendeten Broadcast-Nachricht zu aktualisieren, wobei der Sendevorgang der bereits gesendeten Broadcast-Nachricht einen Sendevorgang zum Senden der Broadcast-Nachricht umfasst, der während der Sendung der Broadcast-Nachricht aufgezeichnet wurde.

12. Vorrichtung gemäß einem der Ansprüche 7-11,
wobei das Steuermodul (404) dazu ausgelegt ist, gemäß einer Identifizierung des Sendevorgangs der aktuellen zu sendenden Broadcast-Nachricht und einer Identifizierung des Sendevorgangs der bereits gesendeten Broadcast-Nachricht zu bestimmen, ob der Sendevorgang der aktuellen zu sendenden Broadcast-Nachricht der gleiche Sendevorgang wie der Sendevorgang der bereits gesendeten Broadcast-Nachricht ist.

13. Endgerät, das die Vorrichtung gemäß einem der Ansprüche 7-12 umfasst.

## Revendications

1. Procédé d'envoi de diffusion qui est un mécanisme appliqué entre des applications dans un dispositif terminal de transmission d'informations, le procédé étant appliqué au dispositif terminal et comprenant :
l'acquisition, (S101), à partir d'une file d'attente d'envoi de diffusion, d'un message de diffusion courant à envoyer, et
la détermination d'un processus d'envoi pour envoyer le message de diffusion courant à envoyer ;
**caractérisé par**
la détermination (S102) d'un processus d'envoi d'un message de diffusion déjà envoyé dans la file d'attente d'envoi de diffusion, le message de diffusion déjà envoyé étant en cours de traitement et étant réservé dans la file d'attente d'envoi de diffusion ; et
la détermination (S103), selon que le processus d'envoi du message de diffusion courant à envoyer est ou non le même processus d'envoi que le processus d'envoi du message de diffusion déjà envoyé, qu'il convient ou non d'envoyer le message de diffusion courant à envoyer à un destinataire de diffusion du message de diffusion courant à envoyer pendant que le message de diffusion déjà envoyé est en cours de traitement,
dans lequel la détermination (S103), selon que le processus d'envoi du message de diffusion courant à envoyer est ou non le même processus d'envoi que le processus d'envoi du message de diffusion déjà envoyé, qu'il convient ou non d'envoyer le message de diffusion courant à envoyer à un destinataire de diffusion du message de diffusion courant à envoyer pendant que le message de diffusion déjà envoyé est en cours de traitement comprend :
quand le processus d'envoi du message de diffusion courant à envoyer est différent du processus d'envoi du message de diffusion déjà envoyé, l'envoi du message de diffusion courant à envoyer au destinataire de diffusion du message de diffusion courant à envoyer pendant que le message de diffusion déjà envoyé est en cours de traitement.

2. Procédé selon la revendication l, le procédé comprenant en outre, après l'envoi du message de diffusion courant à envoyer au destinataire de diffusion du message de diffusion courant à envoyer :
le retrait (S203) du message de diffusion déjà envoyé de la file d'attente d'envoi de diffusion, et la mémorisation du message de diffusion déjà envoyé dans une matrice ; et
après la réception d'un résultat de retour d'information envoyé par un destinataire de diffusion courant du message de diffusion déjà envoyé, l'envoi (S204) du message de diffusion déjà envoyé mémorisé dans la matrice à un destinataire de diffusion suivant du message de diffusion déjà envoyé.

3. Procédé selon la revendication l, dans lequel la détermination (S103), selon que le processus d'envoi du message de diffusion courant à envoyer est ou non le même processus d'envoi que le processus d'envoi du message de diffusion déjà envoyé, qu'il convient ou non d'envoyer le message de diffusion courant à envoyer à un destinataire de diffusion du message de diffusion courant à envoyer pendant que le message de diffusion déjà envoyé est en cours de traitement comprend :
quand le processus d'envoi du message de diffusion courant à envoyer est le même processus d'envoi que le processus d'envoi du message de diffusion déjà envoyé, la réalisation (S304) d'une commande de non-envoi du message de diffusion courant à envoyer au destinataire de diffusion du message de diffusion courant à envoyer pendant que le message de diffusion déjà envoyé est en cours de traitement.

4. Procédé selon la revendication 3, comprenant en outre :
quand le processus d'envoi du message de diffusion courant à envoyer est le même processus d'envoi que le processus d'envoi du message de diffusion déjà envoyé,
l'acquisition d'un message de diffusion suivant à envoyer, lequel suit le message de diffusion courant à envoyer, à partir de la file d'attente d'envoi de diffusion, et la détermination d'un processus d'envoi du message de diffusion suivant à envoyer ; et
quand le processus d'envoi du message de diffusion suivant à envoyer est différent du processus d'envoi du message de diffusion déjà envoyé, l'envoi du message de diffusion suivant à envoyer à un destinataire de diffusion du message de diffusion suivant à envoyer pendant que le message de diffusion déjà envoyé est en cours de traitement.

5. Procédé selon l'une quelconque des revendications 1 à 4, dans lequel le processus d'envoi du message de diffusion déjà envoyé comprend un processus d'envoi, enregistré durant l'envoi du message de diffusion, pour envoyer le message de diffusion, et le processus d'envoi du message de diffusion déjà envoyé est mis à jour en fonction d'un état de traitement du message de diffusion déjà envoyé.

6. Procédé selon l'une quelconque des revendications 1 à 5, dans lequel il est déterminé que le processus d'envoi du message de diffusion courant à envoyer est ou non le même processus d'envoi que le processus d'envoi du message de diffusion déjà envoyé en fonction d'une identification du processus d'envoi du message de diffusion courant à envoyer et d'une identification du processus d'envoi du message de diffusion déjà envoyé.

7. Appareil d'envoi de diffusion qui est un mécanisme appliqué entre des applications dans un dispositif terminal de transmission d'informations, l'appareil étant appliqué à un dispositif terminal et comprenant :
un module d'acquisition (401), configuré pour acquérir, à partir d'une file d'attente d'envoi de diffusion, un message de diffusion courant à envoyer ;
un premier module de détermination de processus d'envoi (402), configuré pour déterminer un processus d'envoi du message de diffusion courant à envoyer ;
**caractérisé par**
un second module de détermination de processus d'envoi (403), configuré pour déterminer un processus d'envoi d'un message de diffusion déjà envoyé dans la file d'attente d'envoi de diffusion, le message de diffusion déjà envoyé étant en cours de traitement et étant réservé dans la file d'attente d'envoi de diffusion ; et
un module de commande (404), configuré pour déterminer, selon que le processus d'envoi du message de diffusion courant à envoyer est ou non le même processus d'envoi que le processus d'envoi du message de diffusion déjà envoyé, qu'il convient ou non d'envoyer le message de diffusion courant à envoyer à un destinataire de diffusion du message de diffusion courant à envoyer pendant que le message de diffusion déjà envoyé est en cours de traitement,
dans lequel le module de commande (404) est configuré spécifiquement pour :
envoyer, quand le processus d'envoi du message de diffusion courant à envoyer est différent du processus d'envoi du message de diffusion déjà envoyé, le message de diffusion courant à envoyer au destinataire de diffusion du message de diffusion courant à envoyer pendant que le message de diffusion déjà envoyé est en cours de traitement.

8. Appareil selon la revendication 7, comprenant en outre :
un module de mémorisation (405), configuré pour retirer, après l'envoi du message de diffusion courant à envoyer au destinataire de diffusion du message de diffusion courant à envoyer, le message de diffusion déjà envoyé de la file d'attente d'envoi de diffusion, et mémoriser le message de diffusion déjà envoyé dans une matrice,
dans lequel
le module de commande (404) est configuré pour envoyer, après la réception d'un résultat de retour d'information envoyé par un destinataire de diffusion courant du message de diffusion déjà envoyé, le message de diffusion déjà envoyé mémorisé dans la matrice à un destinataire de diffusion suivant du message de diffusion déjà envoyé.

9. Appareil selon la revendication 7, dans lequel le module de commande (404) est configuré spécifiquement pour :
réaliser une commande de non-envoi, quand le processus d'envoi du message de diffusion courant à envoyer est le même processus d'envoi que le processus d'envoi du message de diffusion déjà envoyé, du message de diffusion courant à envoyer au destinataire de diffusion du message de diffusion courant à envoyer pendant que le message de diffusion déjà envoyé est en cours de traitement.

10. Appareil selon la revendication 9, dans lequel le module de commande (404) est configuré en outre pour :
acquérir, quand le processus d'envoi du message de diffusion courant à envoyer est le même processus d'envoi que le processus d'envoi du message de diffusion déjà envoyé, un message de diffusion suivant à envoyer, lequel suit le message de diffusion courant à envoyer, à partir de la file d'attente d'envoi de diffusion, et déterminer un processus d'envoi du message de diffusion suivant à envoyer ; et
envoyer, quand le processus d'envoi du message de diffusion suivant à envoyer est différent du processus d'envoi du message de diffusion déjà envoyé, le message de diffusion à envoyer à un destinataire de diffusion du message de diffusion à envoyer pendant que le message de diffusion déjà envoyé est en cours de traitement.

11. Appareil selon l'une quelconque des revendications 7 à 10, comprenant en outre :
un module de mise à jour (406), configuré pour mettre à jour le processus d'envoi du message de diffusion déjà envoyé en fonction d'un état de traitement du message de diffusion déjà envoyé, le processus d'envoi du message de diffusion déjà envoyé comprenant un processus d'envoi,
enregistré durant l'envoi du message de diffusion, pour envoyer le message de diffusion.

12. Appareil selon l'une quelconque des revendications 7 à 11, dans lequel le module de commande (404) est configuré pour déterminer que le processus d'envoi du message de diffusion courant à envoyer est le même processus d'envoi que le processus d'envoi du message de diffusion déjà envoyé en fonction d'une identification du processus d'envoi du message de diffusion courant à envoyer et d'une identification du processus d'envoi du message de diffusion déjà envoyé.

13. Dispositif terminal, comprenant l'appareil selon l'une quelconque des revendications 7 à 12.
